# EUROPEAN PATENT APPLICATION

(11) **EP 4 703 241 A1**
(43) Date of publication of application: **04.03.2026**
(21) Application number: 24197323.9
(22) Date of filing: 29.08.2024
(51) Int. Cl.: B62D 25/18

(54) **SAFETY SYSTEM FOR A VEHICLE**

(71) Applicant: VOLVO TRUCK CORPORATION, 405 08 Göteborg (SE)
(72) Inventor: Nalawade, Dinkar, Bangalore - 560043, Karnataka (IN); Chandrappa, Manjunath, 563125 Karnataka (IN)
(74) Representative: Germain Maureau

(57) **Abstract**

A safety system (10) including a guard member (20) configured to be supported about a wheel unit (130) of a vehicle (100) to receive an airborne material, the guard member being configured to be transitioned between a first position and a second position; a motor (60) configured to transition the guard member between the first position and the second position; a sensor (90, 92) configured to provide a detection of one or more of moisture in an area surrounding the wheel unit of the vehicle and a height of at least a portion of the vehicle from a road surface; and a control unit (80) configured to operate the motor to transition the guard member between the first position and the second position in response to the detection provided by the sensor.

## Description

### TECHNICAL FIELD

The disclosure relates generally to a safety system configured for use on a vehicle. In particular aspects, the disclosure relates to a safety system configured for use on a vehicle to receive an airborne material released from one or more of a wheel unit of the vehicle and a road surface to protect the vehicle, the vehicle passengers, surrounding vehicles, surrounding drivers, cyclists, pedestrians, and the like from a potentially hazardous and/or damaging condition.

The disclosure may relate to heavy-duty vehicles, such as trucks, buses, and/or construction equipment, among other vehicle types. However, although the disclosure may be described with respect to a particular vehicle, the disclosure is not restricted to any particular vehicle.

### BACKGROUND

It is common for a tire of a vehicle to release, splash, and/or spray a fluid, such as water, alone or in combination with debris, such as dirt, rocks, vegetation, litter, and/or the like from a road surface into air surrounding the vehicle, potentially causing a hazardous and/or damaging condition for the vehicle, the vehicle passengers, surrounding vehicles, surrounding drivers, cyclists, pedestrians, and/or the like. A vehicle may typically employ a mud flap, splash guard, and/or the like to block the fluid, the debris, or a combination thereof from causing a hazardous and/or damaging condition.

However, including a mud flap on a vehicle increases a drag force acting on the vehicle, as air is circulated and trapped between the vehicle and the mud flap. Additionally, on vehicles configured for ride height adjustment, such as a semi-trailer truck including a tractor unit having a fifth-wheel coupling and a trailer unit, adjustment and/or variation of a ride height of the vehicle may cause the mud flap to no longer extend to a length that is adequate for the vehicle and/or for blocking the fluid, the debris, or a combination thereof released from the tire of the vehicle.

It is desirable to provide a safety system configured for use on a vehicle configured to receive an airborne material, released from one or more of a wheel unit of the vehicle and a road surface, to protect the vehicle, the vehicle passengers, surrounding drivers, cyclists, pedestrians, and/or the like from a potentially hazardous condition. It is desirable that the safety system is automatically deployable and/or adjustable in correspondence with one or more of a surrounding environment of the vehicle and a ride height of the vehicle to decrease aerodynamic drag of the vehicle and, thus, improve fuel efficiency of the vehicle and/or to improve adaptability of the safety system to a variety of ride heights and/or vehicles.

### SUMMARY

According to aspects of the disclosure, a safety system configured for use on a vehicle is provided. The safety system includes a guard member configured to be supported about a wheel unit of a vehicle to receive an airborne material. The guard member is configured to be transitioned between a first position and a second position. The safety system includes a motor configured to transition the guard member between the first position and the second position. The safety system includes a sensor configured to provide a detection of one or more of moisture in an area surrounding the wheel unit of the vehicle and a height of at least a portion of the vehicle from a road surface. The safety system includes a control unit configured to operate the motor to transition the guard member between the first position and the second position in response to the detection provided by the sensor.

According to aspects of the disclosure, the guard member may be in a fully-retracted state in the first position.

According to aspects of the disclosure, the guard member may be in a fully-extended state in the second position.

According to aspects of the disclosure, the guard member may be configured to be transitioned to a third position between the first position and the second position.

According to aspects of the disclosure, the control unit may be configured to determine the third position based upon the height of at least the portion of the vehicle from the road surface.

According to aspects of the disclosure, the control unit may be configured to operate the motor to transition the guard member from the first position or the third position toward the second position if the height of at least the portion of the vehicle is greater than or equal to a first predetermined height threshold.

According to aspects of the disclosure, the control unit may be configured to operate the motor to transition the guard member from the second position or the third position toward the first position if the height of at least the portion of the vehicle is less than or equal to a second predetermined height threshold.

According to aspects of the disclosure, the motor may be configured to rotate a gear to transition the guard member between the first position and the second position.

According to aspects of the disclosure, the safety system may include a support member configured to support the guard member about the wheel unit of the vehicle and the gear may be configured to drive the support member to transition the guard member between the first position and the second position.

According to aspects of the disclosure, a vehicle including the safety system according to any aspect of the disclosure presented herein is provided.

According to aspects of the disclosure, the vehicle may include a frame member and a coupling device affixed to the frame member.

According to aspects of the disclosure, the sensor may be configured to provide a detection of a height of one or more of the frame member and the coupling device from a road surface.

According to aspects of the disclosure, a method of blocking an airborne material sprayed from one or more of a wheel unit of a vehicle and a road surface is provided. The method includes providing the safety system according to any aspect of the disclosure presented herein, detecting one or more of moisture in an area surrounding a wheel unit of a vehicle and a height of at least a portion of the vehicle from a road surface, and transitioning the guard member between the first position and the second position in response to detecting one or more of moisture in the area surrounding the wheel unit of the vehicle and the height of at least the portion of the vehicle from the road surface.

According to aspects of the disclosure, the method may include transitioning the guard member to a third position between the first position and the second position.

According to aspects of the disclosure, the method may include determining the third position based upon the height of at least the portion of the vehicle from the road surface.

In the manner described and according to aspects illustrated herein, the safety system, the vehicle, and the method are configured to receive an airborne material, released from one or more of a tire of the vehicle and a road surface, to protect the vehicle, the vehicle passengers, surrounding drivers, cyclists, pedestrians, and/or the like from a potentially hazardous condition. Further, in the manner described and according to aspects illustrated herein, the safety system, the vehicle, and the method are automatically deployable and/or adjustable in correspondence with one or more of a surrounding environment of the vehicle and a ride height of the vehicle to decrease aerodynamic drag of the vehicle and, thus, improve fuel efficiency of the vehicle and/or to improve adaptability of the safety system to a variety of ride heights and/or vehicles.

The disclosed aspects, examples (including any preferred examples), and/or accompanying claims may be suitably combined with each other as would be apparent to a person having ordinary skill in the art. Additional features and advantages are disclosed in the following description, claims, and drawings, and in part will be readily apparent therefrom to persons skilled in the art and/or recognized by practicing the disclosure as described herein.

### BRIEF DESCRIPTION OF THE DRAWINGS

Aspects of the disclosure will be described with reference to the drawings, where like numerals reflect like elements:
**FIG. 1** shows a perspective view of a vehicle according to aspects of the disclosure;
**FIG. 2** shows a perspective view of the vehicle according to **FIG. 1****;**
**FIG. 3A** shows a perspective view of a safety system configured for use on the vehicle of FIG. 1 according to aspects of the disclosure, depicting a guard member of the safety system in a first position;
**FIG. 3B** shows a perspective view the safety system according to **FIG. 3A****,** depicting the guard member of the safety system in a second position;
**FIG. 3C** shows a perspective view of the safety system according to **FIG. 3A****,** depicting the guard member of the safety system in a third position;
**FIG. 4A** shows a perspective view of the safety system configured for use on the vehicle of **FIG. 1** according to aspects of the disclosure, depicting the guard member of the safety system in the first position;
**FIG. 4B** shows a perspective view of the safety system according to **FIG 4A****,** depicting the guard member of the safety system in the second position; and
**FIG. 5** shows a partial schematic view of operation of the safety system according to aspects of the disclosure.

### DETAILED DESCRIPTION

The detailed description set forth below provides information and examples with sufficient detail to enable those skilled in the art to practice the disclosure.

In the description, like numerals represent like parts. Although the technology disclosed herein is described with reference to specific examples, it should be understood that modifications and changes may be made to these examples without going beyond the general scope as defined by the claims. In particular, individual characteristics of the various examples shown and/or mentioned herein may be combined in additional examples. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to a particular example described. On the contrary, the intention of this disclosure is to cover all modifications, equivalents, and alternatives falling within the scope of the disclosure.

Various materials, methods of construction, methods of fastening, and the like may be described in the context of disclosed examples. Those skilled in the art will recognize known substitutes for the materials, construction methods, fastening methods, and the like, all of which are contemplated as compatible with the disclosed example and are intended to be encompassed by the appended claims.

As used in this disclosure and the appended claims, the singular forms "a," "an," and "the" include plural referents, unless the content clearly dictates otherwise. As used in this disclosure and the appended claims, the term "or" is generally employed in a sense including "and/or," unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims, should be understood as including its end value(s), unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to herein as being "directly on," "directly engaged to," "directly connected to," or "directly coupled to" another element or feature, there may be no intervening elements or features present. Other words used to describe the relationship between elements or features should be interpreted in a like manner (e.g., "between" versus "directly between," "adjacent" versus "directly adjacent," etc.).

Spatially relative terms, such as "top," "bottom," "middle," "inner," "outer," "beneath," "below," "lower," "above," "upper," and the like may be used herein for ease of description to describe one element or relationship of a feature to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," "third," etc. may be used herein to describe various elements, components, regions, layers, sections, and/or parameters, these elements, components, regions, layers, sections, and/or parameters should not be limited by these terms. These terms are only used to distinguish one element, component, region, layer, section, or parameter from another element, component, region, layer, section, or parameter. Thus, a first element, component, region, layer, section, or parameter discussed herein could be termed a second element, component, region, layer, section, or parameter without departing from the teachings of the present disclosure.

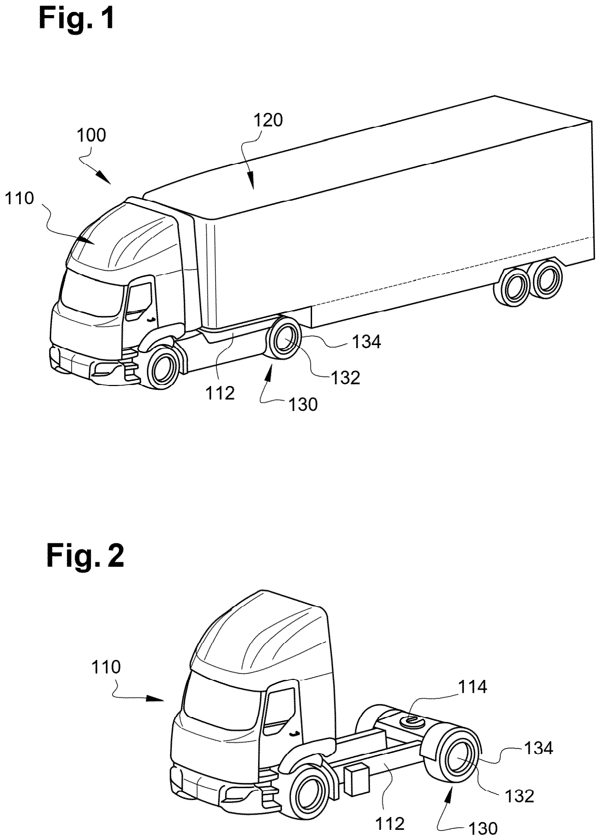

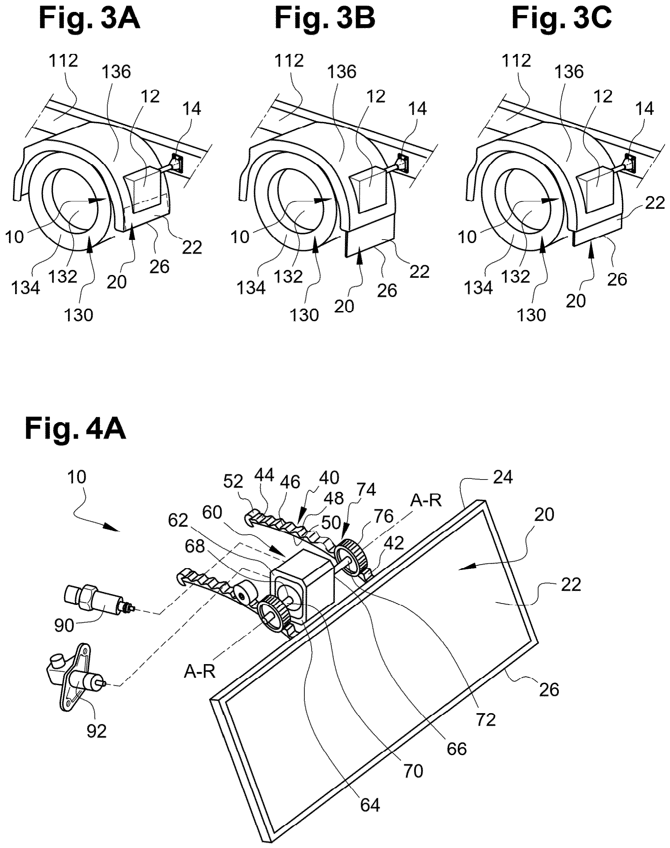

**FIGS. 4A-4B** show a safety system 10 configured for use on a vehicle 100. Referring to **FIGS. 1-2****,** it is contemplated that the vehicle 100 may be a heavy-duty vehicle, such as a truck, bus, and/or construction equipment. However, it should be understood that the safety system 10 may be configured for use on other types of vehicles. In examples, the vehicle 100 to which the safety system 10 is configured for use on may include a tractor unit 110 and a trailer unit 120. The tractor unit 110 may include a frame member 112 and a coupling device 114 affixed to the frame member 112 configured to connect the trailer unit 120 to the tractor unit 110. It is contemplated that the coupling device 114 may be considered and/or referred to herein as a "fifth-wheel coupling 114." In examples, the safety system 10 may be mounted to the frame member 112 of the vehicle 100 with a fastening member 14, such as a bracket and/or the like. The tractor unit 110 may include a plurality wheel units 130. Each wheel unit 130 of the plurality of wheel units 130 may include a wheel body 132 mounted to the frame member 112 of the vehicle 100 and configured to rotate to allow for movement of the vehicle 100 and a tire 134 mounted to the wheel body 132 and configured to provide traction on a road surface (not shown). The plurality of wheel units 130 will be referred to herein as "the wheel unit 130," unless reference to the plurality of wheel units 130 is otherwise necessary.

As illustrated by **FIGS. 3A-4B****,** the safety system 10 is configured to receive and/or block an airborne material (not shown) released, splashed, and/or sprayed from one or more of the tire 134 of wheel unit 130 of the vehicle 100 and the road surface to protect the vehicle 100, the vehicle passengers, surrounding vehicles, surrounding drivers, cyclists, pedestrians, and/or the like from a potentially hazardous and/or damaging condition. It is contemplated that the airborne material may include a fluid, such as water, alone or in combination with debris, such as dirt, rocks, vegetation, litter, and/or the like. Accordingly, the airborne material may also be considered and/or referred to herein as an "at least partially fluid airborne material."

Referring to **FIGS. 3A-4B****,** the safety system 10 includes a guard member 20 (may also be referred to herein as a "mud flap 20" or "splash guard 20") configured to receive the airborne material released from one or more of the tire 134 of the wheel unit 130 of the vehicle 100 and the road surface. In this manner, by receiving the airborne material, the guard member 20 is capable of blocking the airborne material from being released outwardly from one or more the wheel unit 130 and the road surface. It is contemplated that the terms "inner," "inwardly," "outer," and "outwardly" may be understood in relation to the vehicle 100, such that the terms "inner" and "inwardly" may be understood as a direction toward the vehicle 100 and the terms "outer" and "outwardly" may be understood as a direction away from the vehicle 100.

Referring to **FIGS. 3A-4B****,** the guard member 20 is configured to be supported and/or suspended about the wheel unit 130 of the vehicle 100. In examples, the guard member 20 may be configured to be suspended substantially rearward of the wheel unit 130. Additionally or alternatively, the guard member 20 may be configured to extend substantially rearward of the wheel unit 130. It is contemplated that the terms "front," "frontward," "rear," and "rearward" may be understood in relation to a driving direction of the vehicle 100.

Referring to **FIGS. 4A-4B****,** the guard member 20 includes a body 22 extending between a first end 24 and a second end 26. The body 22 of the guard member 20 is configured to receive the airborne material. The body 22 may be substantially flat. In examples, the first end 24 of the body 22 of the guard member 20 may be coupled with a support member 40 of the safety system 10 configured to suspend the guard member 20 about the wheel unit 130 and the second end 26 of the body 22 of the guard member 20 may extend freely. In examples, the body 22 of the guard member 20 may extend between the first end 24 and the second end 26 uninterrupted. Alternatively, the body 22 of the guard member 20 may define one or more aperture (not shown) configured to allow for airflow through the body 22 of the guard member 20. In examples, the body 22 of the guard member 20 may be formed of an elastically deformable material, such as a rubber material and/or the like, configured to allow for movement of the guard member 20 in airflow surrounding the wheel unit 130. Alternatively, the body 22 of the guard member 20 may be formed of a substantially rigid material, such as a plastic material and/or the like, configured to remain substantially stationary in airflow surrounding the wheel unit 130. The body 22 of the guard member 20 may include an image, text, and/or the like. Alternatively, the body 22 of the guard member 20 may be blank.

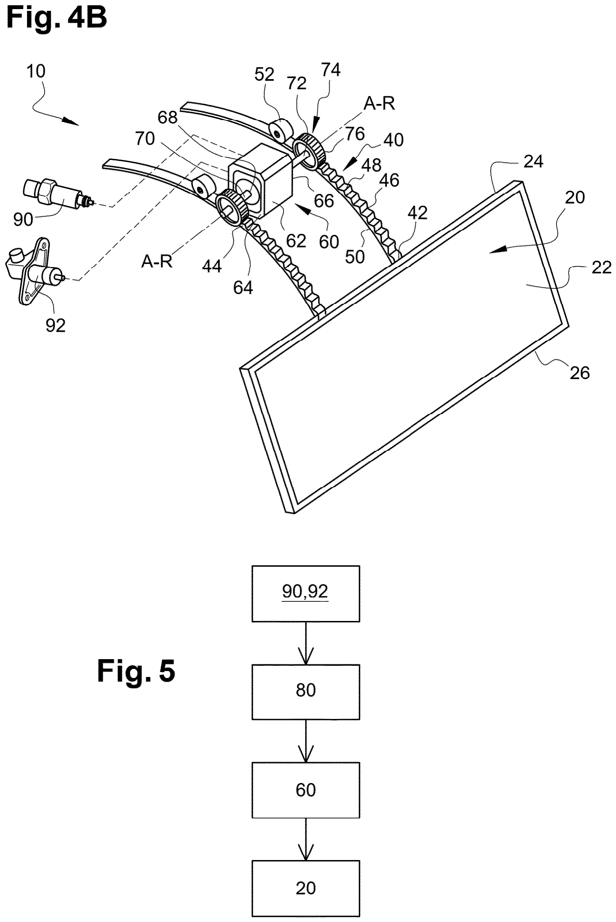

As illustrated by **FIGS. 3A-4B****,** the guard member 20 is configured to be transitioned between, toward, and/or to a first position (see **FIGS. 3A** and **4A**) and a second position (see **FIGS. 3B** and **4B**). In the first position, the guard member 20 may be in a fully-retracted state. Additionally or alternatively, in the first position, the guard member 20 may not be suspended rearward of the wheel unit 130 and may not be capable of receiving the airborne material. Referring to **FIGS. 3A-3C****,** is contemplated that the safety system 10 may include a housing 12 and, in the first position, the guard member 20 may be fully-retracted into the housing 12 of the safety system 10. Additionally or alternatively, in the first position, the guard member 20 may be fully-retracted into a wheel well 136 of the vehicle 100. In the second position, the guard member 20 may be in a fully-extended state. Additionally or alternatively, in the second position, the guard member 20 may be fully-suspended rearward of the wheel unit 130 and be capable of receiving the airborne material. In examples, the guard member 20 may be configured to be transitioned toward and/or to a third position (see **FIG. 3C**) between the first position and the second position. In the third position, the guard member 20 may be in a partially-extended state. Additionally or alternatively, in the third position, the guard member 20 may be partially-suspended rearward of the wheel unit 130 and be capable of receiving the airborne material. It is contemplated that the third position may be variable and/or correspond to any position, extension, and/or length of the guard member 20 between the first position and the second position. In this manner, the guard member 20 is configured to be transitioned between the first position, in which aerodynamic drag corresponding to the guard member 20 is avoided, the second position, in which the airborne material is received by the guard member 20, and the third position, in which extension of the guard member 20 may be adjusted and adaptability of the safety system 10 is improved.

As shown by **FIGS. 4A-4B****,** the safety system 10 includes a motor 60 configured to transition the guard member 20 between, toward, and/or to the first position and the second position. The motor 60 may be configured convert electrical energy into mechanical energy. The motor 60 may be configured to be supported about the wheel unit 130. The motor 60 may include a housing 62 extending between a first end 64 and a second end 66. The motor 60 may be coupled to a shaft 68 extending through the housing 62 of the motor 60 and outwardly from the first end 64 and the second end 66 of the housing 62 of the motor 60. The shaft 68 may extend between a first end 70 and a second end 72 along an axis of rotation A-R. The motor 60 may be configured to rotate the shaft 68 about the axis of rotation A-R. The motor 60 may be configured to rotate the shaft 68 in a first direction and a second direction opposite the first direction. It is contemplated that the first direction may correspond to a counterclockwise direction and the second direction may correspond to a clockwise direction. Additionally or alternatively, the first direction may correspond to transition of the guard member 20 from the first position or the third position toward and/or to the second position and the second direction may correspond to transition of the guard member 20 from the second position or the third position toward and/or to the first position.

The shaft 68 may be coupled to one or more gear 74 and rotation of the shaft 68 exerts a rotational force on the gear 74 to rotate the gear 74. In examples, the shaft 68 may be coupled to at least a first gear 74 and a second gear 74. The first gear 74 may be coupled to the first end 70 of the shaft 68 and the second gear 74 may be coupled to the second end 72 of the shaft 68. The first gear 74 and the second gear 74 may be referred to herein as "the gear 74," unless reference to the first gear 74, the second gear 74, and/or a plurality of gears 74 is otherwise necessary. In examples, the gear 74 may be circular. The gear 74 may include a plurality of teeth 76 configured to mesh with complimentary teeth included by a support member 40 of the safety system 10 configured to suspend the guard member 20 about the wheel unit 130. Accordingly, the gear 74 may be considered and/or referred to herein as a "pinion gear 74." It is contemplated that the motor 60 may include motive elements, such as a stator (not shown) configured to generate an electromagnetic field and a rotor (not shown) coupled to the shaft 68 and configured to interact with the electromagnetic field generated by the stator to rotate with respect to the stator and to transfer mechanical energy and/or rotational force to the shaft 68 to rotate the shaft 68 and, thus, the gear 74.

Referring to **FIGS. 4A-4B****,** the safety system 10 includes one or more support member 40 configured to support the guard member 20 about the wheel unit 130. The support member 40 extends between a first end 42 and a second end 44. In examples, the first end 42 of the support member 40 may be coupled with the first end 24 of the guard member 20. The support member 40 may be in the form of substantially linear belt or rack. The support member 40 may include a first side 46 including a plurality of teeth 48 configured to mesh with the teeth 76 of the gear 74. It is contemplated that a combination of the gear 74 and the support member 40 may be considered and/or referred to herein as a "linear actuator." The support member 40 may include a second side 50 configured to roll and/or slide upon a surface. Accordingly, the second side 50 of the support member 40 may be substantially flat. In examples, the support member 40 may be configured to roll and/or slide upon a roller 52 configured to guide movement of the support member 40. The roller 52 may be affixed to at least a portion of one or more of the housing 12 of the safety system 10, the frame member 112 of the vehicle 100, and the wheel well 136 of the vehicle 100.

The support member 40 may be formed from an elastically deformable material, such as rubber material and/or the like. Alternatively, the support member 40 may be formed of a substantially rigid material, such as a plastic material and/or the like. In examples, the safety system 10 may include at least a first support member 40 and a second support member 40 configured to support the guard member 20 about the wheel unit 130 of the vehicle 100. In examples, the first support member 40 may be configured to engage with the first gear 74 and the second support member 40 may be configured to engage with the second gear 74. The first support member 40 and the second support member 40 may be referred to herein collectively as "the support member 40," unless reference to the first support member 40, the second support member 40, and/or a plurality of support members 40 is otherwise necessary.

Referring to **FIG. 5****,** it is contemplated that the safety system 10 includes an electronic control unit 80 (may also be referred to herein as an "ECU 80" and/or a "control unit 80") configured to operate the motor 60 and, thus, the safety system 10. Additionally or alternatively, it is contemplated that the ECU 80 may be included by the motor 60. Additionally or alternatively, the ECU 80 may be part of and/or configured for operation of the vehicle 100. In examples, the ECU 80 may be configured to operate the safety system 10 by transmitting one or more signal to the motor 60 to prompt the motor 60 to transition the guard member 20 between, toward, and/or to the first position and the second position.

The ECU 80 may be configured to operate the motor 60 in response to operational data and/or measurements received from one or more sensor 90, 92 included by the safety system 10. Additionally or alternatively, the one or more sensor 90, 92 may be considered part of and/or configured to function with the vehicle 100. Additionally or alternatively, it is contemplated that the ECU 80 may utilize historical data, an algorithm, and/or machine learning to operate the safety system 10.

Referring to **FIGS. 4A-5****,** the safety system 10 may include a first sensor 90 configured to detect moisture present within an area surrounding the wheel unit 130 of the vehicle 100. It is contemplated that the first sensor 90 may be considered and/or referred to herein as a "moisture sensor 90." The first sensor 90 may include detection elements, such as a plurality of conductors (not shown) and/or the like configured to generate capacitive data and/or measurements corresponding to moisture present within the area surrounding the wheel unit 130. The first sensor 90 may be configured to transmit data and/or measurements corresponding to an amount of moisture present within the area surrounding the wheel unit 130 to the ECU 80. The ECU 80 may be configured to process the data and/or measurements corresponding to the amount of moisture present within the area surrounding the wheel unit 130. If the amount of moisture present within the area surrounding the wheel unit 130 is greater than or equal to a predetermined moisture threshold, the ECU 80 may be configured to operate the motor 60 to transition the guard member 20 from the first position toward and/or to the second position. In this manner, the guard member 20 may only be extended toward and/or to the second position when moisture and, thus, the airborne material is or has a high probability of being released from one or more of the wheel unit 130 and the road surface.

Additionally or alternatively, the safety system 10 may include a second sensor 92 configured to detect a height of at least a portion of the vehicle 100 from the road surface (may also be referred to herein as a "ride height of the vehicle 100"). It is contemplated that the second sensor 92 may be considered and/or referred to herein as a "ride height sensor 92." In examples, the ride height of the vehicle 100 may correspond to one or more of the frame member 112 of the vehicle 100 and the coupling device 114 of the vehicle 100. It is contemplated that the second sensor 92 may include detection elements, such as a gauge (not shown) configured to register a position of one or more component of a suspension system (not shown) of the vehicle 100, an optical device (not shown) configured to measure a distance corresponding to the ride height of the vehicle 100, and/or the like. The second sensor 92 may be configured to transmit data and/or measurements corresponding to the ride height of the vehicle 100 to the ECU 80. The ECU 80 may be configured to process the data and/or measurements corresponding to the ride height of the vehicle 100. If the ride height of the vehicle 100 is greater than or equal to a first predetermined height threshold, the ECU 80 may be configured to operate the motor 60 to transition the guard member 20 from the first position or third position toward and/or to the second position. If the ride height of the vehicle 100 is less than or equal to a second predetermined height threshold, the ECU 80 may be configured to operate the motor 60 to transition the guard member 20 from the second position or third position toward and/or to the first position.

Additionally or alternatively, if the ride height of the vehicle 100 is greater than or equal to the first predetermined height threshold and/or less than or equal to the second predetermined height threshold, the ECU 80 may be configured to operate the motor 60 to transition the guard member 20 from the first position toward and/or to the third position, to transition the guard member 20 from the second position toward and/or to the third position, and/or to adjust the third position of the guard member 20 between and/or toward the first position and the second position of the guard member 20. It is contemplated that the ECU 80 may be configured to calculate and/or determine the third position based upon the ride height of the vehicle 100. In this manner, extension of the guard member 20 may be adjusted and/or set in relation to the ride height of the vehicle 100, thereby improving adaptability of the safety system 10 in view of a variety of ride heights and/or vehicles.

Referring to **FIGS. 3A-5****,** in operation, the first sensor 90 may detect moisture present within the area surrounding the wheel unit 130. The first sensor 90 may send data and/or measurements corresponding to moisture present within the area surrounding the wheel unit 130 to the ECU 80. If the amount of moisture present within the area surrounding the wheel unit 130 is greater than or equal to the predetermined moisture threshold, the ECU 80 may operate the motor 60 to transition the guard member 20 from the first position toward and/or to the second position. In response to operation of the motor 60 by the ECU 80, the motor 60 rotates the shaft 68 and, thus, the gear 74, in the first direction. Rotation of the gear 74 in the first direction drives the support member 40 linearly and/or outwardly, thereby transitioning the guide member 20 from the first position toward and/or to the second position.

Additionally or alternatively, the second sensor 92 may detect the ride height of the vehicle 100. The second sensor 92 may send data and/or measurements corresponding to the ride height of the vehicle 100 to the ECU 80. If the ride height of the vehicle 100 is greater than or equal to the first predetermined height threshold, the ECU 80 may operate the motor 60 to transition the guard member 20 from the first position or third position toward and/or to the second position. In response to operation of the motor 60 by the ECU 80, the motor 60 rotates the shaft 68 and, thus, the gear 74, in the first direction. Rotation of the gear 74 in the first direction drives the support member 40 linearly and/or outwardly, thereby transitioning the guide member 20 from the first position or third position toward and/or to the second position. If the ride height of the vehicle 100 is less than or equal to the second predetermined height threshold, the ECU 80 may operate the motor 60 to transition the guard member 20 from the second position or third position toward and/or to the first position. In response to operation of the motor 60 by the ECU 80, the motor 60 rotates the shaft 68 and, thus, the gear 74, in the second direction. Rotation of the gear 74 in the second direction drives the support member 40 linearly and/or inwardly, thereby transitioning the guide member from the second position or third position toward and/or to the first position.

Additionally or alternatively, if the ride height of the vehicle 100 is greater than or equal to the first predetermined height threshold and/or less than or equal to the second predetermined height threshold, the ECU 80 may be configured to operate the motor 60 to transition the guard member 20 from the first position toward and/or to the third position, to transition the guard member 20 from the second position toward and/or to the third position, and/or to adjust the third position of the guard member 20 between and/or toward the first position and the second position of the guard member 20. In response to operation of the motor 60 by the ECU 80, the motor 60 rotates the shaft 68 and, thus, the gear 74, in the first direction or the second direction depending on whether the ride height of the vehicle 100 is greater than or equal to the first predetermined height threshold or less than or equal to the second predetermined height threshold, respectively, to transition the guard member 20 toward and/or to the third position and/or to adjust the third position of the guard member 20 between and/or toward the first position and the second position of the guard member 20.

In this manner, the safety system 10 is configured to receive an airborne material released from the wheel unit 130 of the vehicle 100 to protect the vehicle 100, the vehicle passengers, surrounding drivers, cyclists, pedestrians, and/or the like from a potentially hazardous condition, while being automatically deployable and/or adjustable in correspondence with a surrounding environment of the vehicle 100 to decrease aerodynamic drag of the vehicle 100 and, thus, improve fuel efficiency of the vehicle 100. Additionally or alternatively, in this manner, the safety system 10 is adaptable to a variety of ride heights and/or vehicles.

According to examples of the safety system 10, the safety system 10 may be provided as follows:
Example 1: A safety system 10 configured for use on a vehicle 100, the safety system 10 including: a guard member 20 configured to be supported about a wheel unit 130 of a vehicle 100 to receive an airborne material, the guard member 20 being configured to be transitioned between a first position and a second position; a motor 60 configured to transition the guard member 20 between the first position and the second position; a sensor 90, 92 configured to provide a detection of one or more of moisture in an area surrounding the wheel unit 130 of the vehicle 100 and a height of at least a portion of the vehicle 100 from a road surface; and a control unit 80 configured to operate the motor 60 to transition the guard member 20 between the first position and the second position in response to the detection provided by the sensor 90, 92.
Example 2: The safety system 10 according to Example 1, wherein the guard member 20 is in a fully-retracted state in the first position.
Example 3: The safety system 10 according to any of Examples 1-2, wherein the guard member 20 is in a fully-extended state in the second position.
Example 4: The safety system 10 according to any of Examples 1-3, wherein the guard member 20 is configured to be transitioned to a third position between the first position and the second position.
Example 5: The safety system 10 according to Example 4, wherein the control unit 80 is configured to determine the third position based upon the height of at least the portion of the vehicle 100 from the road surface.
Example 6: The safety system 10 according to any of Examples 4-5, wherein the control unit 80 is configured to operate the motor 60 to transition the guard member 20 from the first position or the third position toward the second position if the height of at least the portion of the vehicle 100 is greater than or equal to a first predetermined height threshold.
Example 7: The safety system 10 according to any of Examples 4-6, wherein the control unit 80 is configured to operate the motor 60 to transition the guard member 20 from the second position or the third position toward the first position if the height of at least the portion of the vehicle 100 is less than or equal to a second predetermined height threshold.
Example 8: The safety system 10 according to any of Examples 1-7, wherein the motor 60 is configured to rotate a gear 74 to transition the guard member 20 between the first position and the second position.
Example 9: The safety system 10 according to any of Examples 1-8, including a support member 40 configured to support the guard member 20 about the wheel unit 130 of the vehicle 100 and the gear 74 is configured to drive the support member 40 to transition the guard member 20 between the first position and the second position.
Example 10: A vehicle 100 including the safety system 10 according to any of Examples 1-9.
Example 11: The vehicle 100 according to Example 10, wherein the vehicle 100 includes a frame member 112 and a coupling device 114 affixed to the frame member 112.
Example 12: The vehicle 100 according to Example 11, wherein the sensor 92 is configured to provide a detection of a height of one or more of the frame member 112 and the coupling device 114 from a road surface.
Example 13: A method of blocking an airborne material released from one or more of a wheel unit 130 of a vehicle 100 and a road surface, the method including: providing the safety system 10 according to any of Examples 1-9; detecting one or more of moisture in an area surrounding a wheel unit 130 of a vehicle 100 and a height of at least a portion of the vehicle 100 from a road surface; and transitioning the guard member 20 between the first position and the second position in response to detecting one or more of moisture in the area surrounding the wheel unit 130 of the vehicle 100 and the height of at least the portion of the vehicle 100 from the road surface.
Example 14: The method according to Example 13, including transitioning the guard member 20 to a third position between the first position and the second position.
Example 15: The method according to Example 14, including determining the third position based upon the height of at least the portion of the vehicle 100 from the road surface.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

Additionally, all of the disclosed features of an apparatus may be transposed, alone or in combination, to a method and vice versa.

## Claims

1. A safety system (10) configured for use on a vehicle (100), the safety system comprising:
a guard member (20) configured to be supported about a wheel unit (130) of a vehicle (100) to receive an airborne material, the guard member being configured to be transitioned between a first position and a second position;
a motor (60) configured to transition the guard member (20) between the first position and the second position;
a sensor (90, 92) configured to provide a detection of one or more of moisture in an area surrounding the wheel unit (130) of the vehicle (100) and a height of at least a portion of the vehicle from a road surface; and
a control unit (80) configured to operate the motor (60) to transition the guard member (20) between the first position and the second position in response to the detection provided by the sensor (90, 92).

2. The safety system (10) according to claim 1, wherein the guard member (20) is in a fully-retracted state in the first position.

3. The safety system (10) according to any of claims 1-2, wherein the guard member (20) is in a fully-extended state in the second position.

4. The safety system (10) according to any of claims 1-3, wherein the guard member (20) is configured to be transitioned to a third position between the first position and the second position.

5. The safety system (10) according to claim 4, wherein the control unit (80) is configured to determine the third position based upon the height of at least the portion of the vehicle (100) from the road surface.

6. The safety system (10) according to any of claims 4-5, wherein the control unit (80) is configured to operate the motor (60) to transition the guard member (20) from the first position or the third position toward the second position if the height of at least the portion of the vehicle (100) is greater than or equal to a first predetermined height threshold.

7. The safety system (10) according to any of claims 4-6, wherein the control unit (80) is configured to operate the motor (60) to transition the guard member (20) from the second position or the third position toward the first position if the height of at least the portion of the vehicle (100) is less than or equal to a second predetermined height threshold.

8. The safety system (10) according to any of claims 1-7, wherein the motor (60) is configured to rotate a gear (74) to transition the guard member (20) between the first position and the second position.

9. The safety system (10) according to any of claims 1-8, comprising a support member (40) configured to support the guard member (20) about the wheel unit (130) of the vehicle (100) and the gear (74) is configured to drive the support member to transition the guard member between the first position and the second position.

10. A vehicle (100) including the safety system (10) according to any of claims 1-9.

11. The vehicle (100) according to claim 10, wherein the vehicle includes a frame member (112) and a coupling device (114) affixed to the frame member.

12. The vehicle (100) according to claim 11, wherein the sensor (92) is configured to provide a detection of a height of one or more of the frame member (112) and the coupling device (114) from a road surface.

13. A method of blocking an airborne material released from one or more of a wheel unit (130) of a vehicle (100) and a road surface, the method comprising:
providing the safety system (10) according to any of claims 1-9;
detecting one or more of moisture in an area surrounding a wheel unit (130) of a vehicle (100) and a height of at least a portion of the vehicle from a road surface; and
transitioning the guard member (20) between the first position and the second position in response to detecting one or more of moisture in the area surrounding the wheel unit (130) of the vehicle (100) and the height of at least the portion of the vehicle from the road surface.

14. The method according to claim 13, comprising transitioning the guard member (20) to a third position between the first position and the second position.

15. The method according to claim 14, comprising determining the third position based upon the height of at least the portion of the vehicle (100) from the road surface.
